# EUROPEAN PATENT SPECIFICATION

(11) **EP 1 897 972 B1**
(45) Date of publication and mention of the grant of the patent: **22.01.2014**
(21) Application number: 07253571.9
(22) Date of filing: 10.09.2007
(51) Int. Cl.: C23C 24/04

(54) **Method for processing titanium alloy components**
Verfahren zur Verarbeitung von Komponenten einer Titaniumlegierung
Procédé pour le traitement de composants d'alliage au titane

(30) Priority: 11.09.2006 US 520097
(43) Date of publication of application: 12.03.2008
(73) Proprietor: United Technologies Corporation, Hartford, CT 06101 (US)
(72) Inventor: Vargas, Chris, Hamden, CT 06517 (US)
(74) Representative: Leckey, David Herbert

(56) References cited:
- DE-A1- 2 133 300
- JP-A- 07 278 610
- JP-A- 2005 171 299
- US-A- 5 448 828
- US-A- 6 042 780
- US-A1- 2005 084 701
- US-A1- 2006 045 785
- MARROCCO T ET AL: "Production of titanium deposits by cold - gas dynamic spray : numerical modeling and experimental characterization", JOURNAL OF THERMAL SPRAY TECHNOLOGY, ASM INTERNATIONAL, MATERIALS PARK, US, vol. 15, no. 2, 1 January 2006 (2006-01-01), pages 263-272, XP008086247, ISSN: 1059-9630, DOI: 10.1361/105996306X108219
- KARTHIKEYAN J KAY C M LINDEMAN J LIMA R S ET AL: "Cold spray process to titanium powder", THERMAL SPRAY : SURFACE ENGINEERING VIA APPLIED RESEARCH ; PROCEEDINGS OF THE 1ST INTERNATIONAL THERMAL SPRAY CONFERENCE, 8 - 11 MAY 2000, MONTRÉAL, QUEBEC, CANADA /, MATERIALS PARK, OHIO : ASM INTERNATIONAL, US, 8 May 2000 (2000-05-08), pages 255-262, XP008127119, ISBN: 978-0-87170-680-5

## Description

### BACKGROUND OF THE INVENTION

The invention relates to processing of titanium alloy components. More particularly, the invention relates to repair of titanium alloy gas turbine engine components.

US Patent 5302414 shows an early apparatus for the cold gas-dynamic spray (cold spray) deposition of metal alloys. US Patent 6905728 and US Patent Publication 20060045785 show use of such an apparatus in the restoration of gas turbine engine components. The '728 patent and '785 publication both disclose processes involving cold spray followed by vacuum sintering, hot isostatic pressing (HIP) and heat treatment. US 2005/0084701 also discloses a process involving cold spray followed by the application of a vacuum. In the method of US 2005/0084701 the cold spray may comprise the use of nitrogen.

In typical prior art cold spray processes, helium is used as the carrier gas. Helium, however, suffers from high cost. Accordingly, less expensive gases have been proposed including nitrogen. When applying titanium alloys, nitrogen suffers the disadvantage of contaminating the deposited material (e.g., at temperatures greater than 540C, the nitrogen will absorb into the titanium, forming nitrogen-rich phases which compromise structural integrity by reducing ductility).

### SUMMARY OF THE INVENTION

According to the present invention, there is provided a method for processing a component having a titanium alloy surface as claimed in claim 1.

The vacuum heat treatment may remove residual nitrogen from the pores and facilitate desirable consolidation during the hot isostatic pressing. The material is deposited with a porosity sufficiently high to facilitate evacuation of the nitrogen but sufficiently low to facilitate the consolidation.

The details of one or more embodiments of the invention are set forth in the accompanying drawings and the description below. Other features and advantages of the invention will be apparent from the description and drawings, and from the claims.

### BRIEF DESCRIPTION OF THE DRAWINGS

FIG. 1 is a view of a gas turbine engine blade.
FIG. 2 is a schematic sectional view of an airfoil the blade of FIG. 1.
FIG. 3 is a flowchart of a method for processing the blade.
FIGS. 4 and 5 are schematic sectional views of the airfoil in subsequent stages of processing.

Like reference numbers and designations in the various drawings indicate like elements.

### DETAILED DESCRIPTION

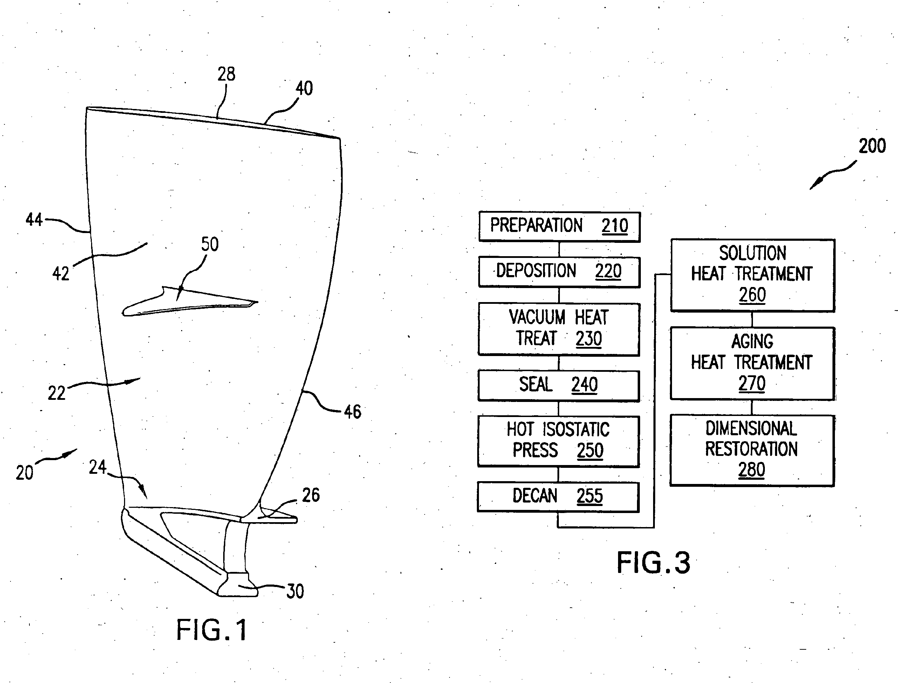

FIG. 1 shows a gas turbine engine blade 20 having an airfoil 22 extending from an inboard end 24 at a platform 26 to an outboard end/tip 28. An attachment root 30 may depend from an underside of the platform. An exemplary airfoil includes suction and pressure side surfaces 40 and 42 extending between a leading edge 44 and a trailing edge 46. As so-far described, the airfoil may be of any of a number of known or yet-developed configurations. The exemplary blade further includes a midspan shroud 50.

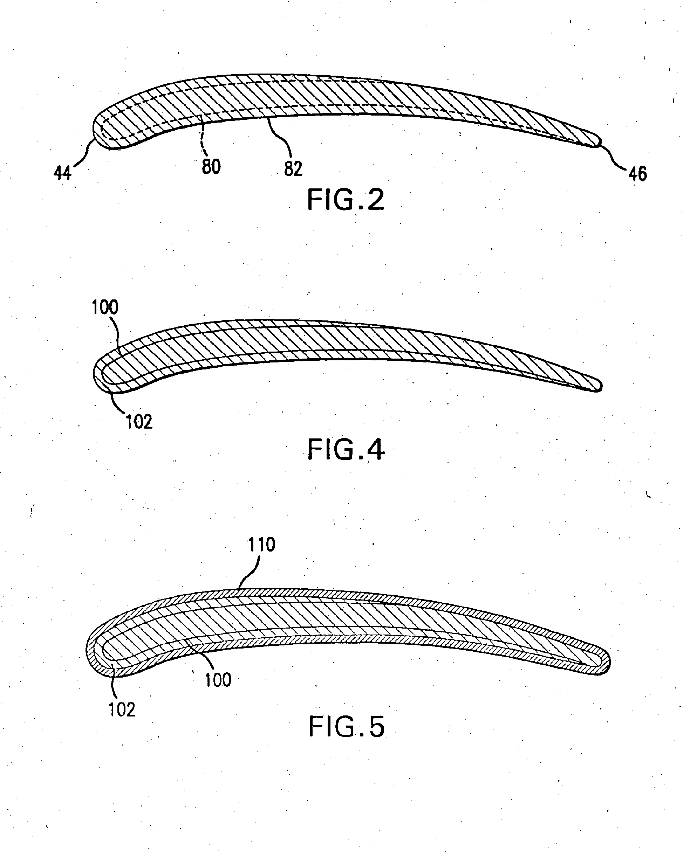

In use, the blade, and airfoil in particular, may be subject to foreign object damage (FOD) and erosion. Other common wear areas may include shroud contact faces, root pressure faces, the blade tip, and the platform. FIG. 2 shows, in broken line, an eroded airfoil surface/contour 80 below a baseline contour 82. An exemplary restoration process 200 (FIG. 3) includes preparation 210. Exemplary preparation may include one or more cleaning, machining, or surface treatment (e.g., blasting) steps to leave a receptive surface 100 (FIG. 4).

The preparation 210 is followed by a cold spray process 220. The cold spray process involves using a nitrogen-based carrier gas to apply a restoration material (deposit/deposition material) 102 (FIG. 4). Exemplary carrier gas is essentially pure nitrogen. Use of nitrogen over noble gases has material cost advantages. Thus, the presence of noble components in the carrier gas (e.g., a nitrogen-helium mix) would not be expected to adversely effect performance, only cost. Although higher temperatures are typically associated with improved deposition, exemplary deposition temperature is less than about 540C to avoid absorption of nitrogen into the deposited titanium. An exemplary range is about 400-540C, more narrowly, about 480-520C. Exemplary restoration material is delivered from a powder alloy source of like composition to the blade substrate. Exemplary blade substrate and powder alloy materials are titanium alloys (e.g., Ti-6Al-4V, Ti-8Al-1Mo-1V, and Ti-5.5Al-3.5Sn-3Zr-1Nb-0.25Mo-0.3Si (by weight)).

After the deposition 220, the blade is subject to a vacuum heat treatment 230. The vacuum heat treatment may serve several purposes. The vacuum heat treatment may evacuate nitrogen from the deposited material. To facilitate evacuation of the nitrogen, the as-deposited material advantageously has sufficient porosity. For this purpose, with Ti-6Al-4V, advantageous porosity is at least 8%. To facilitate consolidation of the deposited material in the subsequent hot isostatic pressing, advantageously the as-deposited porosity does not exceed an associated maximum value. For the exemplary Ti-6Al-4V, an appropriate maximum is about 20% porosity. The vacuum heat treatment may also promote diffusion and sintering between the deposited particles and between the deposited particles and the substrate. For Ti-6Al-4V, an exemplary vacuum heat treatment to serve these purposes is under vacuum conditions at about 800-1000C for about 2-4 hours.

To further facilitate ultimate consolidation, after the vacuum sintering 230 the pores are advantageously sealed. An exemplary sealing process 240 is a canning process. In an exemplary canning process, a stainless steel jacket 110 (FIG. 5) is applied to encapsulate the blade or at least the portion subjected to the cold spray. Alternative sealing may involve selective laser sintering of at least a surface layer of the deposited material. Alternatively, a laser process such as disclosed in US Patent Publication 20060133947A1 may melt a surface layer.

The sealed/canned blade airfoil (or portion thereof) is then subjected to the hot isostatic pressing (HIP) 250. The HIP may substantially eliminate the initial porosity (e.g. to less than about 0.5%) to permit normal use of the blade. With the exemplary Ti-6Al-4V, exemplary HIP parameters are at a temperature of about 800-1000C, a pressure of at least about 100MPa (e.g., about 100-103MPa) at a time of about 2-4 hours.

The HIP process may be followed by a decanning 255 (e.g., cutting or machining away a pre-formed can or machining away a melt-formed can) and one or more heat treatment stages. Various heat treatments are known or may be developed. An exemplary two-stage heat treatment includes a solution heat treatment 260 followed by an aging heat treatment 270. An exemplary solution heat treatment 260 is at relatively high temperature (e.g., about 960C for about 2-4 hours) whereas as an exemplary aging heat treatment 270 is at a lower temperature (e.g., about 600C for about 2-8 hours). Finally, the blade may be returned to its serviceable dimensions (e.g., blueprint dimensions) 280 by conventional methods, such as machining, grinding, and/or blending.

The exemplary process may be adapted as a modification of an existing restoration process that uses a helium carrier gas. The existing process may be modified by addition of the sealing/canning step.

One or more embodiments of the present invention have been described. Nevertheless, it will be understood that various modifications may be made without departing from the scope of the invention. For example, details of the particular component and details of any particular existing equipment used in the restoration may influence details of any particular implementation. Accordingly, other embodiments are within the scope of the following claims.

## Claims

1. A method for processing a component (20) having a titanium alloy surface, the method comprising:
cold gas-dynamic spray depositing (220) a titanium-based deposit onto the titanium alloy surface, wherein the cold gasdynamic spray depositing (220) is performed with a nitrogen based carrier gas and nitrogen from the carrier gas is contained in the as-deposited deposit;
vacuum heat treating (230) the component, wherein the vacuum heat treating (230) is effective to remove a majority of the nitrogen from the as-deposited deposit; and
sealing (240) the deposit after the vacuum heat treating;
**characterised in that**
the depositing (220) applies the deposit with 8-20% porosity and further **characterised by**
hot isostatic pressing (250) the component after the sealing.

2. The method of claim 1 further comprising:
solution heat treating (260) and aging heat treating (270) after the hot isostatic pressing (250).

3. The method of claim 1 or 2 wherein:
the cold gas-dynamic spray depositing (220) is performed at a temperature of 400-540C.

4. The method of claim 3 wherein:
the cold gas-dynamic spray depositing (220) is performed at a temperature of 480-520C.

5. The method of any preceding claim wherein:
the depositing uses (220) a powder material comprising at least one titanium alloy.

6. The method of any preceding claim wherein:
the sealing (240) comprises canning.

7. The method of any preceding claim wherein:
the carrier gas comprises at least 50% nitrogen by partial pressure.

8. The method of any preceding claim wherein:
the hot isostatic pressing (250) comprises pressing for 2-4 hours at 100-103MPa and 800-1000C.

9. The method of any preceding claim wherein:
the sealing (240) comprises at least one of:
applying a separate pre-formed metal jacket (110); and/or
laser sealing.

10. The method of any preceding claim wherein:
the hot isostatic pressing (250) is effective to reduce the porosity to less than 0.5%.

## Patentansprüche

1. Verfahren zum Bearbeiten einer Komponente (20) mit einer Oberfläche aus Titanlegierung, wobei das Verfahren aufweist:
dynamisches Kaltgas-Spritzabscheiden (220) einer Abscheidung auf Titanbasis auf der Oberfläche aus Titanlegierung, wobei das dynamische Kaltgas-Spritzabscheiden (220) mit einem Trägergas auf Stickstoffbasis durchgeführt wird, und Stickstoff aus dem Trägergas in der Abscheidung im Zustand wie abgeschieden enthalten ist;
Hitzebehandeln (230) der Komponente im Vakuum, wobei das Hitzebehandeln (230) im Vakuum wirksam ist, einen größeren Teil des Stickstoffs aus der Abscheidung im Zustand wie abgeschieden zu entfernen; und
Versiegeln (240) der Abscheidung nach dem Hitzebehandeln im Vakuum;
**dadurch gekennzeichnet, dass**
das Abscheiden (220) die Abscheidung mit einer Porosität von 8 - 20 % aufträgt, und außerdem **gekennzeichnet durch** heißisostatisch Pressen (250) der Komponente nach dem Versiegeln.

2. Verfahren nach Anspruch 1, außerdem aufweisend:
Lösungshitzebehandeln (260) und Alterungshitzebehandeln (270) nach dem heißisostatischen Pressen (250).

3. Verfahren nach Anspruch 1 oder 2, bei dem:
das dynamische Kaltgas-Spritzabscheiden (220) bei einer Temperatur von 400 - 540 C° durchgeführt wird.

4. Verfahren nach Anspruch 3, bei dem:
das dynamische Kaltgas-Spritzabscheiden (220) bei einer Temperatur von 480 - 520 C° durchgeführt wird.

5. Verfahren nach einem vorangehenden Anspruch, bei dem:
das Abscheiden (220) ein Pulvermaterial, das mindestens eine Titanlegierung aufweist, verwendet.

6. Verfahren nach einem vorangehenden Anspruch, bei dem:
das Versiegeln (240) ein Einhülsen aufweist.

7. Verfahren nach einem vorangehenden Anspruch, bei dem:
das Trägergas partialdruckmäßig mindestens 50 % Stickstoff aufweist.

8. Verfahren nach einem vorangehenden Anspruch, bei dem:
das heißisostatische Pressen (250) ein Pressen für 2 - 4 Stunden bei 100 - 103 MPa und 800 - 1000 C° aufweist.

9. Verfahren nach einem vorangehenden Anspruch, bei dem:
das Versiegeln (240) mindestens eine der Maßnahmen aufweist:
Anbringen einer separaten vorgeformten Metallumhüllung (110); und/oder
Laserversiegeln.

10. Verfahren nach einem vorangehenden Anspruch, bei dem das heißisostatische Pressen (250) wirksam ist, die Porosität auf weniger als 0,5 % zu verringern.

## Revendications

1. Procédé de traitement d'un composant (20) ayant une surface d'alliage de titane, le procédé comprenant les étapes consistant à :
déposer par pulvérisation dynamique de gaz froid (220) un dépôt à base de titane sur la surface d'alliage de titane, dans lequel le dépôt par pulvérisation dynamique de gaz froid (220) est effectué avec un gaz véhiculaire à base d'azote et l'azote du gaz véhiculaire est contenu dans le dépôt tel qu'appliqué ;
traiter à chaud sous vide (230) le composant, dans lequel le traitement à chaud sous vide (230) est efficace pour éliminer la majeure partie de l'azote du dépôt tel qu'appliqué ; et
sceller (240) le dépôt après le traitement à chaud sous vide ;
**caractérisé en ce que**
le processus de dépôt (220) applique le dépôt avec une porosité de 80 à 20 %, et **caractérisé en outre par** :
une compression isostatique à chaud (250) du composant après le scellage.

2. Procédé selon la revendication 1, comprenant en outre :
un traitement à chaud en solution (260) et un traitement à chaud par vieillissement (270) après la compression isostatique à chaud (250).

3. Procédé selon la revendication 1 ou 2, dans lequel :
le dépôt par pulvérisation dynamique de gaz froid (220) est effectué à une température de 400 à 540 °C.

4. Procédé selon la revendication 3, dans lequel :
le dépôt par pulvérisation dynamique de gaz froid (220) est effectué à une température de 480 à 520 °C.

5. Procédé selon l'une quelconque des revendications précédentes, dans lequel :
le dépôt (220) utilise un matériau pulvérulent comprenant au moins un alliage de titane.

6. Procédé selon l'une quelconque des revendications précédentes, dans lequel :
le scellage (240) comprend un gainage.

7. Procédé selon l'une quelconque des revendications précédentes, dans lequel :
le gaz véhiculaire comprend au moins 50 % d'azote en pression partielle.

8. Procédé selon l'une quelconque des revendications précédentes, dans lequel :
la compression isostatique à chaud (250) comprend une compression pendant 2 à 4 heures à 100 à 103 MPa et 800 à 1000 °C.

9. Procédé selon l'une quelconque des revendications précédentes, dans lequel :
le scellage (240) comprend au moins l'une des opérations
d'application d'une chemise métallique préformée séparée (110) ; et/ou
de scellage au laser.

10. Procédé selon l'une quelconque des revendications précédentes, dans lequel :
la compression isostatique à chaud (250) est efficace pour réduire la porosité à moins de 0,5 %.
